# EUROPEAN PATENT APPLICATION

(11) **EP 3 087 830 A1**
(43) Date of publication of application: **02.11.2016**
(21) Application number: 16167148.2
(22) Date of filing: 26.04.2016
(51) Int. Cl.: A01G 25/16

(54) **IRRIGATION SYSTEM WITH LOCAL OR REMOTE COMMAND**

(30) Priority: 30.04.2015 IT UB20150575
(71) Applicant: CLABER S.P.A., 33080 Fiume Veneto (PN) (IT)
(72) Inventor: SPADOTTO, Gian Luigi, 33170 Pordenone (PN) (IT); FRANCHINI, Gaetano, 33080 Fiume Veneto (PN) (IT); DE BIASI, Roberto, 33170 Pordenone (PN) (IT)
(74) Representative: Mittler, Enrico

(57) **Abstract**

An irrigation system is described, which comprises, in combination, one or more devices (1) for supplying water equipped with a local command (2) for a single cycle of manual supplying of predetermined duration and a computer application (APP) which is downloadable onto a device (3) for distance communication, which is adapted to command both the carrying out of a single cycle of manual supplying of predeterminable duration and the carrying out of a cycle of repetitive supplying of predeterminable duration and frequency. A supplying device (1) may consist of a one-way controller and/or of a two-way controller and/or of a cockpit with several solenoid

## Description

The present invention relates to an irrigation system which includes devices for supplying water, with the possibility of local or remote command.

The terms "devices for supplying water" or "irrigation devices" in particular mean controllers with solenoid valves incorporated, but cockpits with several solenoid valves may also fall under those terms, for example of the type described in EP 2905519 A1.

The simplest controllers (open-closed) are normally commanded or programmed manually on-site, while cockpits are normally commanded or programmed remotely.

On the other hand, devices for remote communication are well known and widely used, such as for example smartphones and tablets onto which computer applications (so-called "apps") are loadable, with which the user is able to manage various kinds of operations, also at great distances.

In light of this background art, it is the object of the present invention to create an irrigation system which is able to take advantage of all the old and new potentialities to supply water where irrigation is required, both at a continuous cycle which is automatically repeatable and with a manual supply command for a manually predeterminable duration.

To achieve the aforesaid object, the system according to the present invention is characterized in that it comprises, in combination, one or more devices for supplying water equipped with a local command for a single cycle of manual supplying of predetermined duration and a computer application which is downloadable onto a device for distance communication, adapted to command both the carrying out of a single cycle of manual supplying of predeterminable duration and the carrying out of a cycle of repetitive supplying of predeterminable duration and frequency.

Thereby, the user has three possibilities for commanding the water supply from the irrigation devices, the one of manual direct command at the positioning location of the irrigation device, the one of remote manual command with predeterminable single cycle by means of an application on a smartphone or tablet, and finally the one of remote command of predeterminable repetitive automatic cycles through the application on smartphones or tablets.

In essence, the user has the possibility of controlling the operation of his/her irrigation devices as he/she sees fit: manually in local mode or manually or automatically in remote mode.

The features of the irrigation system according to the present invention will become apparent from the following description of one of its embodiment examples disclosed in the accompanying drawings, in which:
figure 1 shows the principle diagram of an irrigation system comprising a communication device of the smartphone or tablet type, and an irrigation device of the one-way controller type;
figure 2 shows a diagram of the irrigation system in figure 1, in greater detail;
figure 3 shows a perspective view of a one-way controller which can be used in the irrigation system according to the present invention;
figure 4 shows a perspective view of a two-way controller which can be used in the irrigation system according to the present invention;
figure 5 shows a top view of a cockpit of solenoid valves which can be used in the irrigation system according to the present invention.

The irrigation system according to the invention is based essentially on one or more irrigation devices 1 which have a button 2 for manually commanding the supply for a predetermined duration, and at the same time can be activated by means of an application ("app") which is downloadable onto a communication device 3 of the smartphone or tablet type, or the like.

The connection (indicated as signals 4) between the irrigation device(s) 1 and the communication device 3 is achieved by means of Bluetooth technology, in particular Bluetooth Low Energy or BLE.

A rain sensor 5 may be provided, which communicates with the irrigation device(s) 1 by means of a signal 16 so as to prevent or stop the supply in the event of rain.

The application, or app, downloaded onto the communication device 3 is capable of commanding the irrigation device(s) 1 to carry out an automatically repeated irrigation cycle ("AUTOMATIC" mode), which can be programmed by means of the app itself, also in a different manner for the various irrigation devices and for the irrigation lines under control, or may command the manual execution of one irrigation cycle of programmable duration by means of the same app ("MANUAL" mode).

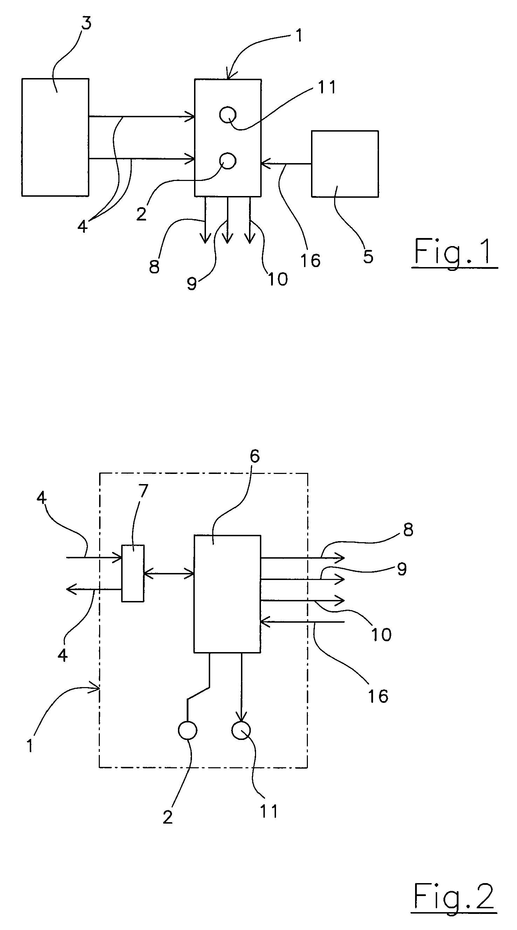

By observing figure 2 in particular, it is noted that the irrigation device 1 includes an internal control unit 6 equipped with a Bluetooth transceiver 7, which communicates with the remote device 3 by means of signals 4, according to which it carries out an automatic irrigation cycle (indicated as signal 8) or a manual irrigation cycle (indicated as signal 9), the duration of which is programmable, e.g. between 1 and 60 minutes, by means of the app of the remote device 3.

The control unit 6 can also be commanded by button 2 to carry out a manual irrigation cycle of programmed duration, e.g. of 15 minutes (indicated as signal 10).

The irrigation device 1 also includes a LED or other illuminated element 11 for signaling the activated status of the irrigation device.

The operating method of the irrigation system according to the invention is as follows.

Once the app is downloaded onto the remote device 3, the user of the latter first decides to command an automatically repeated irrigation cycle, which is the same or different for the various irrigation devices 1 included in the aforesaid app, or a manual cycle for which the user may program the start time, the duration, the quantity of water to be supplied and still more.

In the first case ("AUTOMATIC" mode), LED 11 of the irrigation device(s) being controlled turns on with a light of a first predetermined color (e.g. blue), in the second case ("MANUAL" mode), the LED itself turns on with a light of a different color (e.g. green for a first controlled supply line, yellow for a possible second controlled line, purple for a possible third controlled line, white for a possible fourth controlled line, etc.).

Similar operating modes but with fixed manually commanded supply duration are implemented by locally maneuvering button 2 of the individual irrigation devices 1 with similar turning on of the respective LEDs 10.

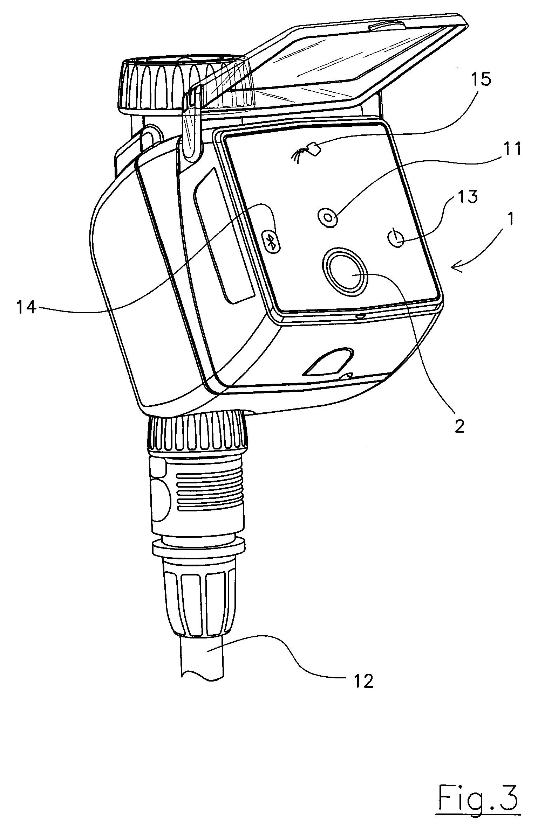

An example of irrigation device 1 which can be used for the irrigation system according to the present invention is shown in figure 3, where a one-way controller is shown (that is with a single internal solenoid valve and a single water outlet or irrigation line 12). A symbol 13 of switch turned off, a symbol 14 of switch turned on and a symbol 15 indicating the execution of a test are on the front of the controller, in addition to a button 2 and a LED 11.

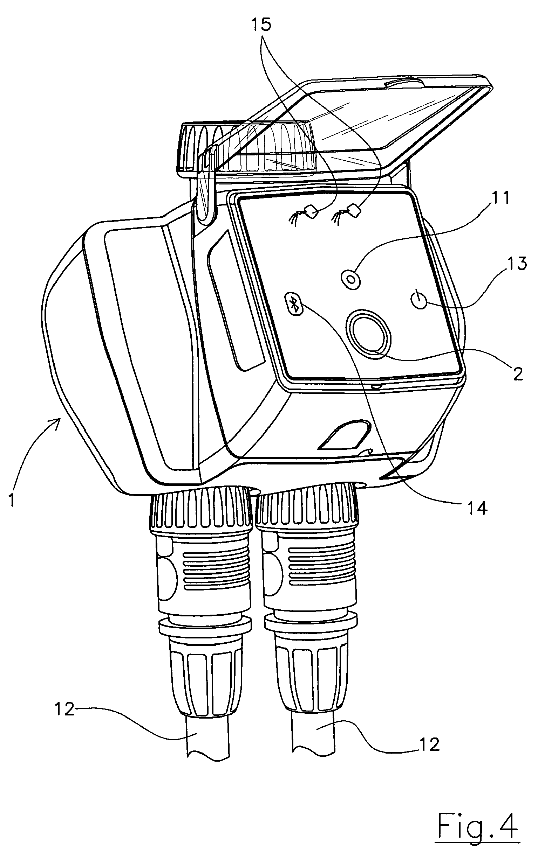

Another example, which is shown in figure 4, consists of a two-way controller (that is, with two internal solenoid valves and two water outlets or irrigation lines 12). A symbol 13 of switch turned off, a symbol 14 of switch turned on and two symbols 15 indicating the execution of a test on respective supplying lines are on the front of the controller, in addition to a button 2 and a LED 11.

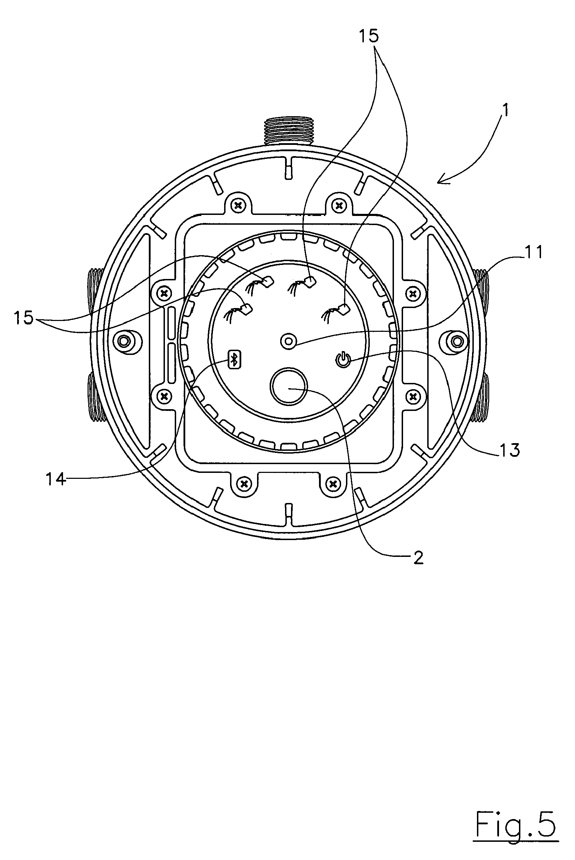

Figure 5 shows another type of irrigation device 1. This time a cockpit with four solenoid valves is involved, substantially of the type described in EP 2905519 A1, comprising four internal solenoid valves (not shown), a command button 2, a LED 11, a symbol 13 of switch turned off, and a symbol 14 of switch turned on and four symbols 15 indicating the execution of a test on respective supplying lines.

## Claims

1. Irrigation system **characterized by** comprising, in combination, a plurality of water supplying devices (1) provided with a respective local command (2) for a single manually controlled irrigation cycle of programmable duration, a remote communication device (3) of smartphone, tablet or similar type and a computer application (APP) downloaded on said communication device (3), said computer application (APP) being suitable to drive independently said water supplying devices (1) to carry out both a single cycle of manually controlled irrigation of programmable duration and a repetitive irrigation cycle of programmable duration and frequency.

2. Irrigation system according to claim 1, **characterized in that** each water supplying device (1) comprises a LED (11) illuminated with different colors depending on the controlled operation of the water supplying device (1).

3. Irrigation system according to claim 1 or 2, **characterized by** comprising a water supplying device (1) consisting of a one-way controller.

4. Irrigation system according to claim 1 or 2, **characterized by** comprising a water supplying device (1) consisting of a two-way controller.

5. Irrigation system according to claim 1 or 2, **characterized by** comprising a water supplying device (1) consisting of a cockpit with more solenoid valves.
